# EUROPEAN PATENT APPLICATION

(11) **EP 1 927 440 A1**
(43) Date of publication of application: **04.06.2008**
(21) Application number: 06125079.1
(22) Date of filing: 30.11.2006
(51) Int. Cl.: B25J 9/16

(54) **Method and device for monitoring the condition of an industrial robot**

(71) Applicant: ABB Research Ltd., 8050 Zürich (CH)
(72) Inventor: Sjöstrand, Niclas, SE-722 40 Västerås (SE); Blanc, Dominique, SE-722 40 Västerås (SE)
(74) Representative: Reyier, Ann-Mari

(57) **Abstract**

The invention relates to a method for monitoring the condition of an industrial robot (1) having a plurality of links (4,6,8,10) movable relative to each other, and a plurality of driving components controlling the movements of the links. The method comprises: calculating reference values (P_{ref}) for the driving components based on a mathematical model for said driving components, acquiring present values (Pₘ) for the driving components, estimating the deviation (ΔP,Tₑᵣᵣ) between the reference values and the present values for the driving components, determining whether the deviation is normal or non-normal, and based thereon monitoring the condition of the robot.

## Description

### TECHNICAL FIELD

The present invention is concerned with monitoring the condition of an industrial robot. The invention is particularly useful for monitoring malfunction of the robot.

### BACKGROUND ART

An industrial robot comprises a manipulator and a control system. The manipulator comprises links movable relative to each other. The links are different robot parts such as a base, arms, and a wrist. Each joint has joint components such as a motor, motor gears and motor bearings. The movements of the manipulator are driven by the motors. The control system comprises one or more computers and drive units for controlling the manipulator. The speeds and accelerations of the links are controlled by the control system of the robot that generates control signals to the motors.

Industrial robots are used in industrial and commercial applications to perform precise and repetitive movements. It is then important for a faultless functionality of the robot that the industrial robot is performing according to its nominal performance, which means that the links have to bee in good condition and perform together in an expected way.

However, it is difficult to detect or determine if an industrial robot is not performing according to its nominal performance. The operator, such as a service technician, has to rely on what he sees and on information from the control system about the performance of the robot, such as the position and speed of the motors taken from readings on sensors on the manipulator. The operator then analyses the present condition of the robot based on his personal experience resulting in a varying diagnosis due to subjective measures. In many cases the operator analysing the present condition and performance of the robot also needs to evaluate information from different sources, such as different motors at the same time or external conditions in the facility where the robot is located or is even faced with an emergency stop. To find the cause of a failure the operator may have to try different hypotheses and it is therefore time consuming and often results in long stand-still periods for the robot causing huge costs.

Due to frequent personal rotation today, operators of robot service technician staff do not have sufficient experience to diagnose and isolate a failure in performance of the robot.

It is desirable to attain a simple method to diagnostic the present performance or condition of the robot.

### SUMMARY OF THE INVENTION

The aim of the invention is to provide a method to automatically monitor the condition of an industrial robot based on the information that is available for the present performance of the robot.

This aim is obtained by a method as defined by claim 1.

Such a method for monitoring the condition of an industrial robot having a plurality of links movable relative to each other, and a plurality of driving components controlling the movements of the links comprises:
- retrieving reference values for the driving components,
- retrieving present values for the driving components,
- estimating the deviation between the reference values and the present values for the driving components,
- determining whether the deviation is normal or non-normal, and based thereon monitoring the condition of the robot.

By comparing the present values for the driving component with calculated reference values it is made possible to detect a deviation between the values due to malfunction of the robot. For example it is thereby possible to detect deviation trends in amplitude distribution and/or detect deviation trends in frequency distribution and thereby recognize mechanical problems. The present values for the driving components may be measured values or calculated values calculated based on measured values.

Preferably the values are any of: position, velocity, acceleration, and torque. This is an advantage because these values are already measured or can be calculated based on measured values and the method does therefore not require additional sensors and measuring equipment.

In another embodiment of the invention said monitored condition of the robot is wear of the driving components. The driving components comprise at least the mechanical units: motors, motor gears, bearings, axes, and brakes. This makes it possible to detect wear of the motors, motor gears, motor bearings and axes, and brakes. Further by determining wear of the driving component the need for service may be predicted.

In another embodiment of the invention a deviation parameter is calculated based on the deviation, which parameter is a measure of the condition of the performance of the robot. This is an advantage because it is possible for an operator to monitor the parameter and react on changes in the parameter.

The invention also relates to a computer program as well as a computer readable medium according to the corresponding appended claims. The steps of the method according to the invention are well suited to be controlled by a processor provided with such a computer program.

The invention also relates to a device for monitoring the condition of an industrial robot as defined in claim 7.

Other advantageous features and advantages of the invention will appear from the following description.

### BRIEF DESCRIPTION OF THE DRAWINGS

The present invention will be described in more detail in connection with the enclosed schematic drawings.
- Figure 1: shows an industrial robot comprising a manipulator and a control system according to an embodiment of the invention,
- Figure 2: shows a block diagram illustrating an example of control loop for controlling an actuator of the robot,
- Figure 3: shows a block diagram illustrating a device for monitoring malfunction of an industrial robot according to an embodiment of the invention,
- Figure 4: shows a flow chart illustrating a method for monitoring malfunction of an industrial robot according to an embodiment of the invention, and
- Figure 5: shows a diagram showing an example of monitoring the condition of the robot.

### DESCRIPTION OF THE PREFERRED EMBODIMENTS

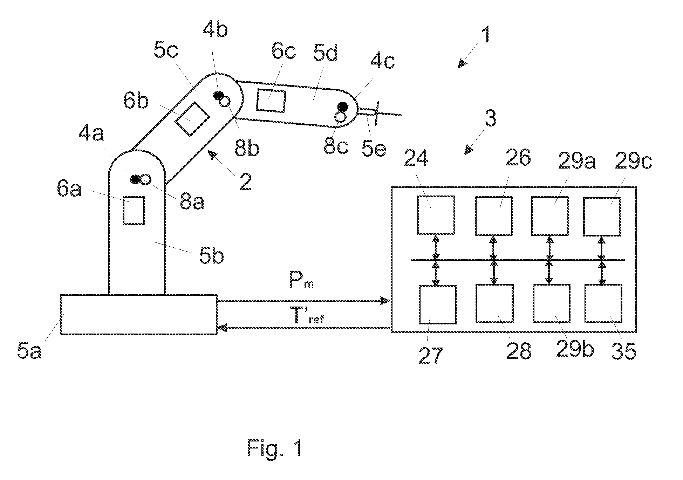

Figure 1 shows a industrial robot 1 comprising a manipulator 2 and control system 3. The industrial robot 1 has a plurality of links movable relative to each other about a plurality of joints 4a-c. The links shown in figure 1 are rotatable in relation to each other around an axis of rotation. Other types of robots have links that are linearly movable relative each other. The links are in this case robot parts, such as a stand 5a, robot arms 5b-d, and a tool holder 5e. The industrial robot comprises a plurality actuators 6a-c for controlling the position and speed of the links. Each actuator is connected to a drive unit 29a-c for generating control signals to the motor. In this embodiment the drive units are located in the control system. However, it is also possible to locate the drive units on the manipulator, close to the actuator. The actuator comprises driving components such as, for instance, motors, motor gears, bearings, axes, brakes.

Each joint of the manipulator is provided with a sensor 8a-c detecting the position of the joint. Signals from the sensors 8a-c are transmitted to the control system 3. The control system 3 thereby receives signals comprising measured data Pₘ. The measured data comprises, for instance, joint angular position, joint velocity, and joint acceleration.

The control system 3 comprises, in this case, a logic unit 24, and a memory means 26 for storing control programs including movement instructions for the robot, a program executer 27 for executing the movement instructions, a path planner 28 for planning robot paths and drive units 29a-c for generating reference signals T'_{ref} to the motors. The path planner 28 is planning the robot paths and further generating joint reference values to the drive unit 29a-c. The path planner 28 generates the joint reference values based on movement instructions from the robot program and a mathematical model of the robot. During operation of the robot, the program instructions are executed, thereby making the robot work as desired. The drive units 29a-c are controlling the motors by controlling the motor torque and the motor position in response to the joint reference values from the path planner 28. The joint reference values for example, represent reference values for positions and velocities of the joints. The logic unit or computing unit comprises a microprocessor, or processors comprising a central processing unit (CPU) or a field-programmable gate array (FPGA) or any a semiconductor device containing programmable logic components and programmable interconnects for performing the steps in a computer program. The control system 3 further comprises a monitoring device 35 according to an embodiment of the invention.

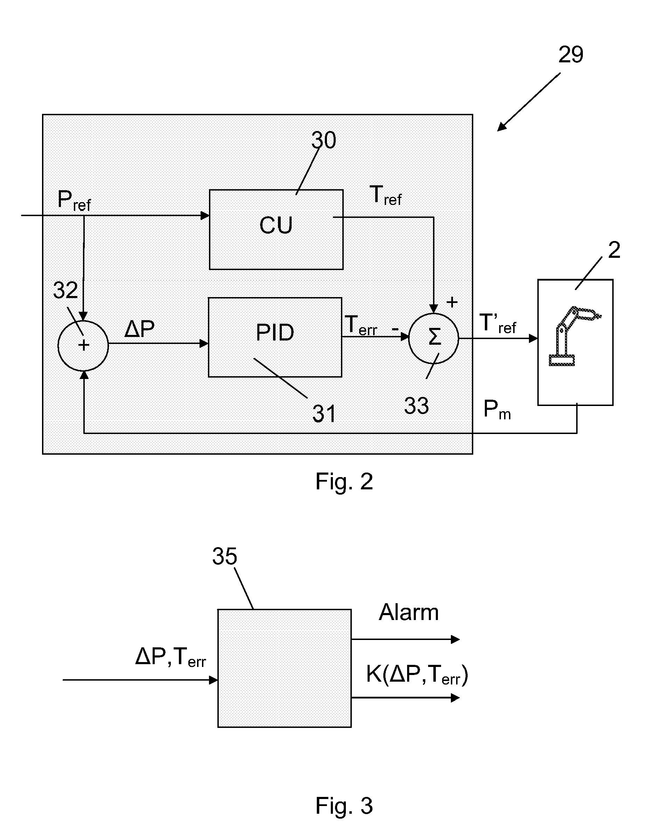

Figure 2 shows an example of one of the drive units 29 described above. The drive unit 29 receives joint reference values P_{ref} from the path planner 28 of the robot and measured values Pₘ for joint positions and/or joint velocities from the sensors. The drive unit comprises, for example, a calculating means 30, a PID regulator 31, and summing means 32,33. In the calculating means 32, a reference value T_{ref} for the motor torque is calculated based on a mathematical model for the actuator and the reference value P_{ref} of the joint position or joint velocity. The deviation ΔP between the measured joint values Pₘ and the joint reference values P_{ref} are continuously calculated in the summing means 32. The calculated deviation ΔP is fed to the PID regulator 31. The PID regulator is sensitive to changes in the manipulator condition. Output from the PID-regulator is the deviation in torque Tₑᵣᵣ between the calculated and measured torque. The reference value T_{ref} for the motor torque has to be corrected due to the deviation in torque Tₑᵣᵣ between calculated and measured torque. In order to generate a corrected value T_{ref} for the reference torque, the torque reference value T_{ref} and the estimated torque deviation Tₑᵣᵣ are added in the summing means 33. This example of a drive unit is calculating torque values but it is to be understood that the calculated values may also be any of: position, velocity and acceleration.

Figure 3 shows a block diagram illustrating a monitoring device 35 for monitoring malfunction of an industrial robot. The monitoring device 35 is implemented in the control system 3 as software, hardware, or a combination thereof. The monitoring device 35 monitors the condition of the robot based on whether the deviation is normal or non-normal. A deviation parameter K(ΔP,Tₑᵣᵣ) is calculated in the monitoring device 35 dependent on the deviation in joint values ΔP or the deviation in torque Tₑᵣᵣ. The deviation parameter K(ΔP,Tₑᵣᵣ) is for instance calculated by normalizing the deviation or by calculating a logarithm of the deviation or by processing the deviation using any other mathematical method. The monitoring device 35 determines whether the deviation is normal or non-normal. This is for instance done by comparing the deviation parameter K(ΔP,Tₑᵣᵣ) with a preset reference constant value V representing a maximum allowed value of the deviation parameter. Another method to determining whether the deviation is normal or non-normal is to detect deviation trends in amplitude distribution and/or detect deviation trends in frequency distribution of the deviation parameters K(ΔP,Tₑᵣᵣ) during a period of time. Detecting deviation trends may also be done by calculating a differential quotient value between two or more deviation parameters K(ΔP,Tₑᵣᵣ) subsequent in time and compare these to a reference differential quotient value. The deviation parameter K(ΔP,Tₑᵣᵣ), for instance, is monitored shown on a display in order for the operator to manually control the condition of the robot. The monitoring device 35 is adapted to monitor the deviation parameter K(ΔP,Tₑᵣᵣ), or the change in the deviation parameter K(ΔP,Tₑᵣᵣ) during a time period. The monitoring device 35 is in this case located in the control system. The monitoring device 35 is in this case adapted to execute an order to the control systems based on the monitored deviation. An example on an order is executing an alarm if the deviation is determined to be non-normal, for instance, when the deviation exceeds a maximum value.

The monitoring device 35 may also be located on an external computer. The monitoring device may also be adapted for manual control such as transfer of the deviation parameter K(ΔP,Tₑᵣᵣ), or the change in the deviation parameter K(ΔP,Tₑᵣᵣ) during a time period to an external interface, such a display or other manual control means such as light emitting diodes.

The monitored condition of the robot is for instance wear of the driving components. The detected condition may be slipping in the gears, a greater motor speed/acceleration or a greater load then expected.

In an embodiment, the monitoring device is adapted to both analyse the deviation and to generate an alarm if the deviation between the reference values P_{ref} and the measured values Pₘ is non-normal. For instance, the deviation ΔP, the deviation parameter K(ΔP,Tₑᵣᵣ) or the deviation in torque Tₑᵣᵣ between calculated and measured torque is compared with a maximum value and an alarm is executed when the deviation exceeds the maximum value.

In the following, a method for monitoring the condition of an industrial robot according to the invention will be described. The method is for clarity described for one joint controlled by one actuator but it is to be understood that the same technique may be used controlling two or more joints of the robot at the same time. Reference values for the actuators are calculated based on a mathematical model for said actuators and the deviation between the reference values and present values for the performance of the actuators is calculated. As the deviation between the reference values and present values for the performance of the actuators either the deviation in joint values ΔP or the deviation in torque Tₑᵣᵣ can be used. It is an advantage to use the deviation in joint values ΔP when a particular processing of the data may be performed before monitoring the data, for instance, using a fictitious PID regulator on an external computer or normalizing the data. To use the deviation in torque Tₑᵣᵣ instead when monitoring the data is advantageous because the PID-regulator 31 of the control system can be assembled using hardware data for the current manipulator and the deviation in torque Tₑᵣᵣ is thus calculated customized to the current manipulator and is therefore accurate for the current performance of the manipulator. In other embodiments of the method for monitoring the condition of an industrial robot the deviation between the calculated and measured values of any of position, velocity and acceleration is monitored.

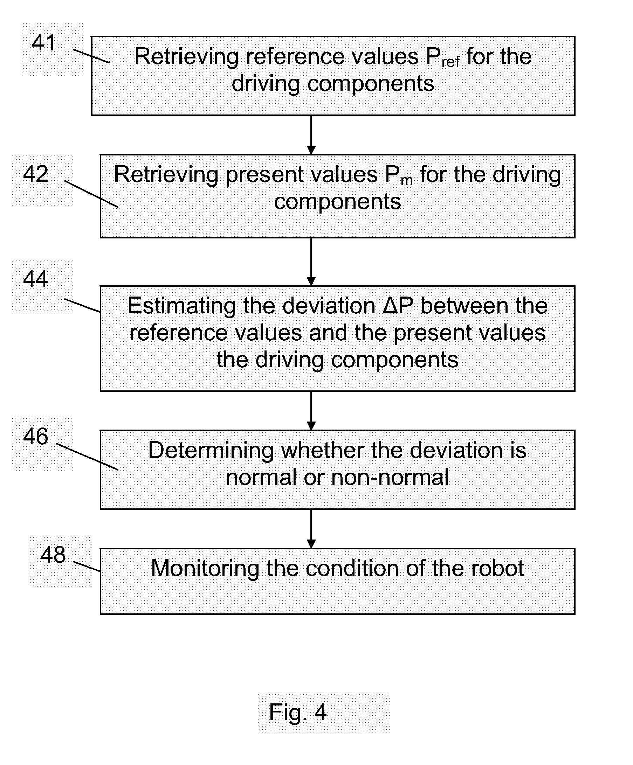

Figure 4 shows a flow chart illustrating the method for monitoring the condition of an industrial robot having a plurality of links movable relative to each other, and a plurality of driving components, controlling the movements of the links. The method according to the present invention may be implemented as software, hardware, or a combination thereof. The method comprises the following steps:

Reference values P_{ref} for the driving components are retrieved (41). The reference values P_{ref} are, for instance, calculated based on a mathematical model for the driving components.

Present values Pₘ for the driving component are retrieved (42). The present values are for instance measured values for joint positions, joint velocities acceleration, and/or torque.

A deviation ΔP is estimated between the reference values P_{ref} and the present values Pₘ of the driving components (44). The deviation ΔP is then both processed in the control system and used for correcting the signals for controlling the manipulator and for monitoring the condition of the manipulator. The deviation ΔP is in one embodiment further processed and a deviation parameter K(ΔP,Tₑᵣᵣ) is calculated dependent on the deviation ΔP or the deviation in torque, acceleration, velocity or position. The deviation parameter K(ΔP,Tₑᵣᵣ), for instance, is calculated by normalizing the deviation or by calculating a logarithm of the deviation.

The deviation ΔP is then analysed and it is determined whether the deviation ΔP is normal or non-normal (46). The deviation ΔP or the deviation parameter K(ΔP,Tₑᵣᵣ) is, for instance, analysed by comparing the deviation parameter K(ΔP,Tₑᵣᵣ) with a preset reference constant value V representing a maximum allowed value of the deviation parameter. The deviation ΔP or the deviation parameter K(ΔP,Tₑᵣᵣ) may also be analysed by detecting deviation trends in amplitude distribution and/or deviation trends in frequency distribution on the deviation parameter K(ΔP,Tₑᵣᵣ) during a period of time. A large deviation indicates a change in the values representing the mechanical properties of the robot.

Based on the analysis of whether the deviation ΔP or Tₑᵣᵣ is normal or non-normal the condition of the robot (48) is monitored, for instance, shown on an external display or in the control system.

These steps can be carried out in the control system of the robot or in an external computer. The deviation ΔP or Tₑᵣᵣ is continuously calculated and monitored so that the condition of an industrial robot is continuously monitored.

Further based on the monitored condition the control system can be adapted to execute orders to the control system, such as executing an alarm when the deviation is determined to be non-normal. Due to limited computer capacity of the control system it is advantageous to transfer the deviation ΔP or the deviation parameter K(ΔP,Tₑᵣᵣ) to an external computer executing the methods according to the invention.

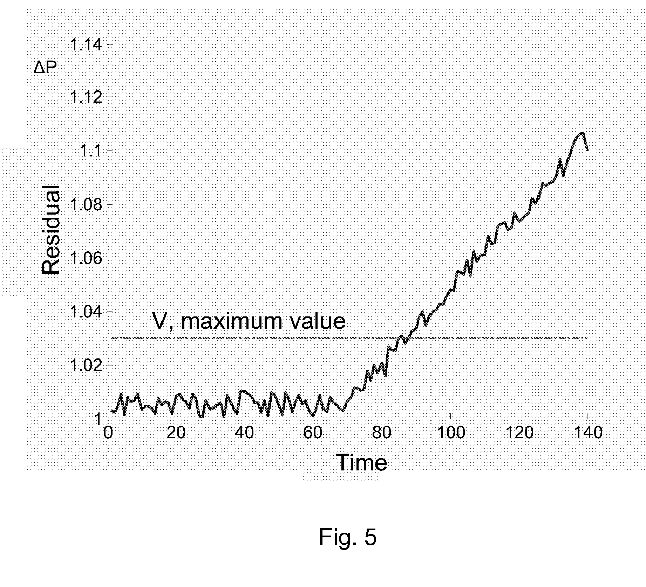

Figure 5 shows a residual diagram showing a deviation ΔP. The deviation ΔP is displayed as a residual during a period of time. A maximum value V is set in the diagram. This figure shows the robot performance when the robot performance is non-normal, and the deviation exceeds the preset maximum value.

## Claims

1. A method for monitoring the condition of an industrial robot (1) having a plurality of links (4,6,8,10) movable relative to each other, and a plurality of driving components controlling the movements of the links,
wherein the method comprises:
- retrieving reference values (P_{ref}) for the driving component,
- retrieving present values (Pₘ) for the driving components,
- estimating the deviation (ΔP, Tₑᵣᵣ) between the reference values and the present values the driving components,
- determining whether the deviation is normal or non-normal, and based thereon monitoring the condition of the robot.

2. The method according to claim1, wherein said values are any of: position, velocity, acceleration, and torque (T).

3. The method according to any of claims 1-2, wherein said monitored condition of the robot is wear of the driving components.

4. The method according to any of claims 1-3, wherein said driving components is any of: motors (6a,6b,6c), motor gears, bearings, axes, brakes.

5. The method according to any of claims 1-4, wherein an alarm (Alarm) is executed when said deviation (ΔP, Tₑᵣᵣ) exceeds a maximum value.

6. The method according to any of claims 1-5, wherein the method comprises calculating a deviation parameter K(ΔP,Tₑᵣᵣ) based on the deviation (ΔP, Tₑᵣᵣ), which parameter is a measure of the condition of the performance of the robot.

7. A computer program directly loadable into the internal memory of a computer, which comprises program code for controlling the steps of any of claims 1-5.

8. A device (35) for monitoring the condition of an industrial robot (1), said robot comprising a plurality of links (4,6,8,10) movable relative to each other, driving components controlling the movements of the links, a path planner (28) adapted to calculate reference values (P_{ref}) for the driving component, and at least one drive unit (29a,29b,29c) adapted to receive present values (Pₘ) for the driving components and to estimate the deviation (ΔP, Tₑᵣᵣ) between the reference value and the present value for the driving components, **characterised in that** the device is adapted to receive the deviation and determine whether said deviation is normal or non-normal.

9. The device according to claim 8, wherein said device is adapted to generate an alarm (Alarm) if said deviation (ΔP, Tₑᵣᵣ) is non-normal.

10. The device according to any of claims 8-9, wherein said device is adapted to calculate a deviation parameter K(ΔP,Tₑᵣᵣ,) based on the deviation (ΔP, Tₑᵣᵣ), which parameter is a measure of the condition of the performance of the robot.

11. A computer readable medium having a computer program recorded thereon, in which said computer program is designed to make a computer control the steps according to any of claims 1-6.
